# EUROPEAN PATENT SPECIFICATION

(11) **EP 3 650 190 B1**
(45) Date of publication and mention of the grant of the patent: **05.10.2022**
(21) Application number: 19189525.9
(22) Date of filing: 01.08.2019
(51) Int. Cl.: B29C 45/00, B29C 45/37, B29C 45/34, B29C 45/36, B29C 45/26, H02G 15/18

(54) **ASSEMBLING DIE**
MONTAGEWERKZEUG
MOULE D'ASSEMBLAGE

(30) Priority: 06.11.2018 CN 201811314879
(43) Date of publication of application: 13.05.2020
(73) Proprietor: ZTT CABLE ACCESSORIES CO.,LTD., Nantong City Jiangsu Province 226000 (CN)
(72) Inventor: SHEN, Wei-Dong, Nantong City, Jiangsu Province. 226000 (CN); ZHANG, Hao, Nantong City, Jiangsu Province 226000 (CN); MA, Zhi-Jin, Nantong City, Jiangsu Province 226000 (CN); TIAN, Zheng-Bing, Nantong City, Jiangsu Province 226000 (CN); MIAO, Wei-Ting, Nantong City, Jiangsu Province 226000 (CN); WAN, Chang, Nantong City, Jiangsu Province 226000 (CN); ZHAO, Yi-Xuan, Nantong City, Jiangsu Province 226000 (CN)
(74) Representative: Zaboliene, Reda

(56) References cited:
- EP-A2- 0 084 264
- WO-A1-2014/182373
- CN-U- 201 975 728
- CN-U- 203 344 250
- DE-A1- 3 806 369
- JP-A- 2001 268 770
- JP-A- 2010 259 134

## Description

### FIELD

The subject matter herein generally relates to an assembling die for cable accessories and high-voltage insulation products.

### BACKGROUND

Rubber-type products are heated and injection molded from steel dies. However, mold lines are inevitably present on the surface of the molded products. The presence of these mold lines will affect the appearance and function of the products. When the molded product is used outdoors, the mold lines attract pollution, the material is subject to ultraviolet aging, and mold lines represent mechanical weak spots. The electrical performance can also be unstable.

So the product needs to be further polished after being molded. However, the polishing process may have flaws, the quality of the polishing is not uniform, which will affect the initial structure of the product, which will affect the performance of the product.

An assembling die which leaves no mold lines is desirable.

WO2014/182373A1 relates to a process for making a multilayered article, the process comprising the steps of: (A) Providing a mold comprising: (1) A mold housing comprising (a) at least one injection port, and (b) defining a mold cavity within which are positioned two deformable, pre-molded polymeric sheets; and (2) A removable, hollow core equipped with at least one vent, the removable, hollow core positioned between and space apart from the two polymeric sheets; (B) injecting under high pressure a viscous, crosslinkable, thermoplastic polymer into the mold cavity between the two polymeric sheets and around the removable core, (C) Drawing a vacuum on the mold cavity through both the vent in the mold housing and the vent in the removable, hollow core before, during and/or after the polymer has been injected into the mold; (D) Forming a less than fully cured multilayered article in the mold cavity; and (E) Removing the less than fully cured multilayer article from the mold cavity.

EP0084264A2 relates to a method for making a molded high voltage splice body by positioning a conductive elastomeric electrode on a mandrel, positioning an extruded conductive elastomeric sleeve over the elastomeric electrode, sealing the ends of the elastomeric sleeve, placing the mandrel with the electrode and sleeve on it into a mold, injecting a curable insulating compound between the electrode and the sleeve under pressure and curing the insulating compound.

DE3806369A1 relates to in order to make the production of cable plugs from elastic material economical, the insulating body (21) is produced first, and the functional carriers (such as the terminal electrode, field-control electrode, measurement electrode and/or outer electrode) which consist of electrically conductive material are then integrally formed on the insulating body in a joint operation. The casting mould or injection mould which is provided for production of the insulating body contains a core whose surface pointing in the mound removal direction is at an inclination angle to the mould removal direction which is not less than a specific minimum. The casting mould or injection mould (11) which is provided for producing the functional supports comprises one or more cores (13, 14) with one or more ducts (16) for feeding the electrically conductive material.

JP2001268770A relates to a metal mold 21 for molding the internal semiconductive layer of the rubber unit for power cable connection, comprising the internal semiconductive layer, an insulating layer formed on the periphery thereof, and an external semiconductive layer formed on the periphery thereof. The metal mold comprises a core 26 having circular cross sections for forming the center of the internal semiconductive layer, two-split dies 22 and 23 which form an air gap coaxial with the core bar 26 around the core 26 and the middle portion of the internal semiconductive layer, and slide cores 24 and 25 which are attached to both ends of the two-split dies 22 and 23, form an air gap identical in diameter to the coaxial air gap, an air gap narrowed in arc shape and connecting to the air gap, and the end portions of the internal semiconductive layer.

CN20195728U relates to a manufacture mold for a high-voltage prefabricated direct-current cable accessory, which is provided with a first mold group, a second mold group, a third mold group, a fourth mold group and a fifth mold group, wherein the first mold group forms a terminal stress cone in the direct-current cable terminal manufacture process, the second mold group forms an insulation body with a plurality of umbrella skirts, the third mold group forms a high-voltage shielding layer in the middle joint manufacture process, the fourth mold group forms a reinforced insulation layer, and the fifth mold group forms an outer semi-conductive shielding layer with joint stress cones at both ends. The shapes of middle joints and terminals can be controlled according to the optimum design requirement, and the problem of the adverse influence of space charge accumulation caused by the traditional manual winding is solved through integral injection molding and one-step forming, and the problems of long heating curing time after winding and forming and process errors of material heat expansion and cold contraction in a molding process are solved. Therefore, the production efficiency is effectively improved, the terminals and the middle joints are formed by prefabricated elements in factories and can carry out electric tests, and the reliability of the product quality is ensured.

CN203344250U relates to a manufacturing die assembly for a water-resisting prefabricated type cable straight joint. The manufacturing die assembly is provided with a plurality of corresponding dies which form the cable straight joint in an injection molding manner, wherein the dies comprises a first die, a second die, a third die and a fourth die; the first die forms a high-voltage shielding layer in the injection molding manner, and a cable is sleeved with the high-voltage shielding layer in the cable straight joint; the second die forms a reinforcing insulating layer in the injection molding manner, and the high-voltage shielding layer is sleeved with the reinforcing insulating layer in the cable straight joint; the third die forms an outer semi-conductive shielding layer in the injection molding manner, and the reinforcing insulating layer is sleeved with the outer semi-conductive shielding layer in the cable straight joint; and the fourth die forms stress cones arranged at two ends of an axial direction of the reinforcing insulating layer in the cable straight joint in the injection molding manner. Compared with the prior art, a conventional production technology that an electric cable accessory is manually wrapped and molded is replaced, the production efficiency is improved, the problems of artificially caused instability and technology errors are solved, the product is guaranteed to meet the water resistance performance requirement, and the quality is safe and reliable.

JP2010259134A relates to an internal semiconductive layer 30 disposed in a normal temperature shrinkage type insulating tube unit 10 for covering a connection portion between conductors of power cables and is cylindrically made by molding. It also has a parting line 180 which is formed by molding and disposed along a direction crossing an axial direction CL of the internal semiconductive layer 30 in the center portion of the internal semiconductive layer 30.

### BRIEF DESCRIPTION OF THE DRAWINGS

Implementations of the present disclosure will now be described, by way of example only, with reference to the attached figures.
FIG. 1 is an isometric, exploded view of a first exemplary embodiment of an assembling die.
FIG. 2 is an isometric view of a second exemplary embodiment of the assembling die.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the exemplary embodiments described herein. The drawings are not necessarily to scale and the proportions of certain parts may be exaggerated to better illustrate details and features. The invention is defined by the appended claims.

Several definitions that apply throughout this disclosure will now be presented.

The term "substantially" is defined to be essentially conforming to the particular dimension, shape, or other feature that the term modifies, such that the component need not be exact. For example, "substantially cylindrical" means that the object resembles a cylinder, but can have one or more deviations from a true cylinder. The term "comprising" means "including, but not necessarily limited to"; it specifically indicates open-ended inclusion or membership in a so-described combination, group, series, and the like.

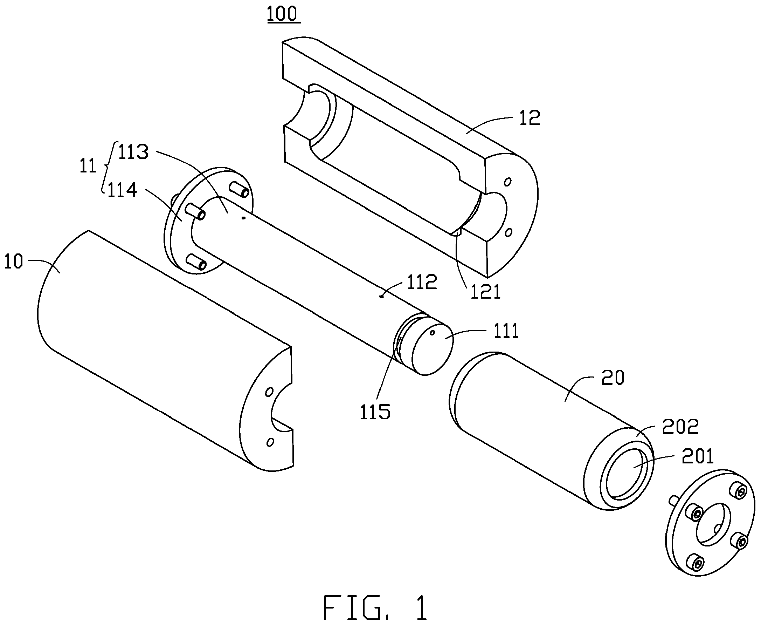

FIG. 1 illustrates an assembling die 100 in a first exemplary embodiment. The assembling die 100 is used to produce cable with accessories and cable with high voltage insulation, particularly shielded tubes. The assembling die 100 includes a shield tube mold 10 and an elastic mold sleeve 20 disposed in the shield tube mold 10.

The shield tube mold 10 is substantially a cylindrical structure or a square structure. In the embodiment, the shield tube mold 10 is a cylindrical structure. The shield tube mold 10 includes a core rod assembly 11 and an outer die 12. The outer die 12 is sleeved outside the core rod assembly 11. The core rod assembly 11 includes a die core 113 and fixing members 114. In the embodiment, the number of the fixing members 114 is two. Each fixing member 114 is fixed to one end of the die core 113 of the core rod assembly 11, and each fixing member 114 is connected to the outer die 12, thereby achieving a secure connection of the outer die 12 to the core rod assembly 11. In an embodiment, each of the fixing members 114 is screwed to one end of the die core 113. The core rod assembly 11 is substantially a cylindrical rod body having a first opening 111 and a second opening 112 at each end. In an embodiment, the two first openings 111 are on the two end surfaces of the die core 113 of the core rod assembly 11. The two second openings 112 are on the peripheral side surface of the die core 113 of the core rod assembly 11. The adjacent first opening 111 and second opening 112 penetrate the die core 113 and communicate with each other internally. The first opening 111 and the second opening 112 at one end of the core rod assembly11 are used for injection molding, and the first opening 111 and the second opening 112 at the other end of the core rod assembly 11 are used as gas exhaust during the injection molding process. A lantern annular slot 115 is defined in each end of the die core 113. Each lantern annular slot 115 is disposed between the first opening 111 and the second opening 112 at the same end. The lantern annular slot 115 is configured to clamp the elastic mold sleeve 20.

The outer die 12 is composed of two symmetrical molds and is substantially a hollow cylinder or a square body. In the embodiment, the outer die 12 is substantially a hollow cylinder. A first die cavity 121 is defined in the outer die 12. Cavity walls that form the first die cavity 121 are matched with a shape of the elastic mold sleeve 20 for mounting the elastic mold sleeve 20. The core rod assembly 11 passes through the outer die 12 along an axis of the outer die 12. Two ends of the outer die 12 are locked to the fixing members 114 by screws to achieve the connection between the outer die 12 and the die core 113, thereby being easy to shape.

The elastic mold sleeve 20 is substantially a hollow cylinderl, and the inner side surface of the elastic mold sleeve 20 is smooth and seamless for molding the outer surface of the product. The diameter of the cross-section of the two ends of the elastic mold sleeve 20 is smaller than the diameter of the intermediate cross-section of the elastic mold sleeve 20. The elastic mold sleeve 20 is installed in the first die cavity 121 of the outer die 12, and the outer walls of the elastic mold sleeve 20 are attached to the cavity walls that form the first die cavity 121. The elastic mold sleeve 20 is sleeved outside the die core 113 of the core rod assembly 11, and a space between the elastic mold sleeve 20 and the die core 113 forms a second die cavity 201. The two second openings 112 penetrate and communicate with the second die cavity 201. The elastic mold sleeve 20 may be made of silicone rubber, fluoroelastomer, or EPDM rubber. The two ends of the elastic mold sleeve 20 extend inwardly to form a lateral annular holding part 202. The holding part 202 is clamped or held in one of the lantern annular slot 115. In the embodiment, the elastic mold sleeve 20 is made of EPDM rubber and can be reused.

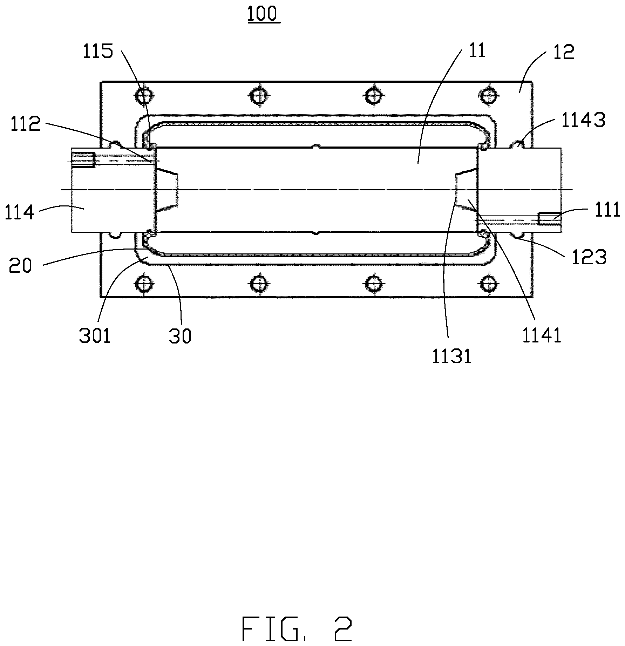

FIG. 2 illustrates the assembling die 100 in a second exemplary embodiment. In the second embodiment, the two first openings 111 are defined in the ends of the fixing members 114. Each second opening 112 is defined in the peripheral side of the fixing member 114. The first opening 111 and the second opening 112 defined in the same fixing member 114 penetrate the fixing member 114 and communicate with each other internally. The first opening 111 and the second opening 112 at one end of the core rod assembly 11 are used for injection molding, and the first opening 111 and the second opening 112 at the other end of the core rod assembly 11 are used as gas exhaust during the injection molding process. The two second openings 112 communicate with the second die cavity 201. The lantern annular slots 115 are formed on each fixing member 114 of the core rod assembly 11. Each lantern annular slot 115 is located between the first opening 111 and the second opening 112 at the same end of the core rod assembly 11. The lantern annular slot 115 is used to hold the elastic mold sleeve 20.

In the embodiment, an extending portion 1141 is disposed on an end surface of each fixing member 114 adjacent to the second opening 112. The lantern annular slot 115 is adjacent to the extending portion 1141. A lantern annular hump 1143 is provided on the peripheral side of each fixing member 114. The lantern annular hump 1143 annularly extends from the peripheral side surface of each fixing member114. Each end surface of the die core 113 defines a groove 1131 matching the extending portion 1141.

A receiving hole (not labeled) penetrating the first die cavity 121 is defined in each end of the outer die 12. The receiving holes are configured to hold the core rod assembly 11. In the embodiment, each receiving hole is configured to hold the fixing member 114. A holding slot 123 is defined in the inner wall of each receiving hole, and each lantern annular hump 1143 is retained in the holding slot 123, thereby achieving the fastening connection between the core rod assembly 11 and the outer die 12.

In the embodiment, the assembling die100 further includes an inner die 30. The material of the inner die 30 is the same as that of the outer die 12. The inner die 30 is substantially a hollow column. The inner die 30 is sleeved outside the core rod assembly 11, and is received in the first die cavity 121. A third die cavity 301 is defined in the inner die 30. Cavity walls that form the third die cavity 301 are matched with a shape of the elastic mold sleeve 20, such that the elastic mold sleeve 20 is attached to the inner sides of the inner die 30.

The disclosed assembling die 100 is simple in operation, safe, environmentally friendly, and reliable in use. The product produced through the assembling die 100 has no mold lines and has smooth surface. No polishing treatment is needed, cost is saved, and the product quality problems caused by polishing are effectively eliminated.

The invention is defined by the appended claims.

## Claims

1. An assembling die comprising:
a shield tube mold (10); and
an elastic mold sleeve (20) disposed in the shield tube mold (10); and
wherein the shield tube mold (10) comprises an outer die (12) and a core rod assembly (11), a first die cavity (121) is defined in the outer die (12), the elastic mold sleeve (20) is sleeved outside the core rod assembly (11) and is received in the first die cavity (121), the core rod assembly (11) passes through the outer die (12), and a space between the elastic mold sleeve (20) and the core rod assembly (11) forms a second die cavity (201);
wherein the elastic mold sleeve (20) is reused in the assembling die (100);
wherein the core rod assembly (11) defines a first opening (111) and a second opening (112) at each end; the first opening (111) and the second opening (112) at the same end communicate with each other internally; the first opening (111) and the second opening (112) at one end of the core rod assembly (11) are used for injection molding, and the first opening (111) and the second opening (112) at the other end of the core rod assembly (11) are used as gas exhaust during the injection molding process; and the second openings (112) communicate with the second die cavity (201).

2. The assembling die of claim 1, wherein a lantern annular slot (115) is defined in each end of core rod assembly (11); the elastic mold sleeve (20) is a hollow cylinder, two ends of the elastic mold sleeve (20) respectively extend inwardly to form an annular holding part (202); the holding part (202) is held in one of the lantern annular slot (115).

3. The assembling die of claim 2, wherein the core rod assembly (11) comprises a die core (113) and two fixing members (114); the elastic mold sleeve (20) is sleeved outside the die core (113), each of the fixing members (114) is fixed to one end of the die core (113), and each of the fixing members (114) is connected to the outer die (12).

4. The assembling die of claim 3, wherein the two first openings (111) are respectively opened on two end surfaces of the die core (113), the two second openings (112) are respectively opened on a peripheral side surface of the die core (113); and the first opening (111) and the second opening (112) at the same end penetrate the die core (113) and communicate with each other internally.

5. The assembling die of claim 4, wherein the lantern annular slots (115) are defined in two ends of the die core (113), and each of the lantern annular slots (115) is disposed between the first opening (111) and the second opening (112) at the same end.

6. The assembling die of claim 3, wherein the outer die (12) is composed of two symmetrical molds and is a hollow cylinder; cavity walls that form the first die cavity (121) are matched with a shape of the elastic mold sleeve (20) for mounting the elastic mold sleeve (20); the core rod assembly (11) passes through the outer die (12) along an axis of the outer die (12), each of the fixing members (114) is screwed to one end of the die core (113), and two ends of the outer die (12) are locked to the fixing members (114) by screws.

7. The assembling die of claim 3, wherein the two first opening (111) are respectively defined in ends of the fixing members (114); each of the second openings (112) is defined in a peripheral side of one of the fixing members (114); and the first opening (111) and the second opening (112) defined in the same fixing member (114) penetrate the fixing member (114) and communicate with each other internally.

8. The assembling die of claim 7, wherein an extending portion (1141) is disposed on an end surface of each of the fixing members (114) and is adjacent to the second opening (112), a groove is opened on each end surface of the die core (113) for matching the extending portion (1141), and each of the extending portions (1141) is held in the groove.

9. The assembling die of claim 8, wherein the lantern annular slots (115) are respectively defined in the fixing members (114), each of the lantern annular slots (115) is located between the first opening (111) and the second opening (112) at the same end of the core rod assembly (11), and each of the lantern annular slots (115) is adjacent the extending portion (1141) at the same end of the core rod assembly (11).

10. The assembling die of claim 8, wherein a lantern annular hump (1143) is provided on a peripheral side of each fixing member (114), the lantern annular hump (1143) annularly extends from a peripheral side surface of each fixing member (114); a receiving hole penetrating the first die cavity (121) is defined in each end of the outer die (12); the receiving holes are configured to hold the core rod assembly (11); a holding slot (123) is defined in an inner wall of each receiving hole, and each lantern annular hump (1143) is retained in the holding slot (123).

11. The assembling die of claim 1, wherein the assembling die (100) further comprises an inner die (30); the inner die (30) is a hollow column, is sleeved outside the core rod assembly (11), and is received in the first die cavity (121); a third die cavity (301) is defined in the inner die (30), cavity walls that form the third die cavity (301) are matched with a shape of the elastic mold sleeve (20), such that the elastic mold sleeve (20) is attached to inner sides of the inner die (30).

12. The assembling die of claim 1, wherein the elastic mold sleeve (20) is made of silicone rubber, fluoroelastomer, or EPDM rubber.

## Patentansprüche

1. Montagewerkzeug, umfassend:
eine Abschirmrohrform (10); und
eine elastische Formhülse (20), die in der Abschirmrohrform (10) angeordnet ist; und
wobei die Abschirmrohrform (10) eine äußere Form (12) und eine Kernstabanordnung (11) umfasst, ein erster Formhohlraum (121) in der äußeren Form (12) definiert ist, die elastische Formhülse (20) ist außerhalb der Kernstabanordnung (11) ummantelt und in dem ersten Formhohlraum (121) aufgenommen wird, die Kernstabanordnung (11) durch die äußere Form (12) und ein Raum zwischen der elastischen Formhülse (20) und die Kernstabanordnung (11) bilden einen zweiten Formhohlraum (201); wobei die elastische Formhülse (20) in dem Montagewerkzeug (100) wiederverwendet wird; wobei die Kernstabanordnung (11) eine erste Öffnung (111) und eine zweite Öffnung an jedem Ende definiert (112); die erste Öffnung (111) und die zweite Öffnung (112) an demselben Ende intern miteinander kommunizieren; die erste Öffnung (111) und die zweite Öffnung (112) an einem Ende des Kernstabpakets (11) werden zum Spritzgießen verwendet, und die erste Öffnung (111) und die zweite Öffnung (112) am anderen Ende des Kernstabpakets (11) werden als Gas und Abgas während des Spritzgießvorgangs verwendet; und die zweiten Öffnungen (112) stehen mit dem zweiten Formhohlraum (201) in Verbindung.

2. Montagewerkzeug nach Anspruch 1, wobei ein Laternenringschlitz (115) an jedem Ende der Kernstabanordnung (11) definiert ist; die elastische Formhülse (20) ein Hohlzylinder ist, zwei Enden der elastischen Formhülse (20) sich jeweils nach innen erstrecken, um ein ringförmiges Halteteil (202) zu bilden; das Halteteil (202) wird in einem der Laternenringschlitze (115) gehalten.

3. Montagewerkzeug nach Anspruch 2, wobei die Kernstabanordnung (11) einen Werkzeugkern umfasst (113) und zwei Befestigungselemente (114); die elastische Formhülse (20) außerhalb des Formkerns (113) geschoben ist, jedes der Befestigungselemente (114) an einem Ende des Formkerns (113) befestigt ist und jedes der Befestigungselemente (114) ist mit dem äußeren Gesenk (12) verbunden.

4. Montagewerkzeug nach Anspruch 3, wobei die zwei ersten Öffnungen (111) jeweils an zwei Endflächen des Werkzeugkerns (113) geöffnet sind, die zwei zweiten Öffnungen (112) jeweils an einer peripheren Seitenfläche des Werkzeugkerns (113) geöffnet sind; und die erste Öffnung (111) und die zweite Öffnung (112) durchdringen den Werkzeugkern (113) am gleichen Ende und kommunizieren intern miteinander.

5. Montagewerkzeug nach Anspruch 4, wobei die Laternenringschlitze (115) an den Enden des Formkerns (113) zweigeteilt sind und jeder der Laternenringschlitze (115) ist zwischen der ersten Öffnung (111) und der zweiten Öffnung (112) am selben Ende angeordnet.

6. Montagewerkzeug nach Anspruch 3, wobei das äußere Werkzeug (12) aus zwei symmetrischen Formen besteht und ein Hohlzylinder ist; Hohlraumwände, die den ersten Formhohlraum (121) bilden sind an eine Form der elastischen Formhülse (20) zum Montieren der elastischen Formhülse (20) angepasst; die Kernstabanordnung (11) durch die äußere Matrize (12) verläuft entlang einer Achse der äußeren Matrize (12), jedes der Befestigungselemente (114) an einem Ende des Matrizenkerns (113) ist angeschraubt und sind an zwei Enden des Außengesenks (12) an den Befestigungselementen (114) durch Schrauben befestigt.

7. Montagewerkzeug nach Anspruch 3, wobei die zwei ersten Öffnungen (111) jeweils in Enden der Befestigungselemente (114) definiert sind; jede der zweiten Öffnungen (112) in einer Umfangsseite eines der Befestigungselemente (114) definiert ist; und die erste Öffnung (111) und die zweite Öffnung (112), die in demselben Befestigungselement (114) definiert sind, das Befestigungselement (114) durchdringen und intern miteinander kommunizieren.

8. Montagewerkzeug nach Anspruch 7, wobei ein Verlängerungsabschnitt (1141) an einer Endfläche von jedem der Befestigungselemente (114) angeordnet ist und benachbart zu der zweiten Öffnung (112) ist, wobei eine Nut an jeder Endfläche des Formkerns (113) geöffnet ist zum Anpassen an den Verlängerungsabschnitt (1141), und jeder der Verlängerungsabschnitte (1141) wird in der Nut gehalten.

9. Montagewerkzeug nach Anspruch 8, wobei jeweils die Laternenringschlitze (115) in den Befestigungselementen (114) definiert sind, jeder der Laternenringschlitze (115) zwischen der ersten Öffnung (111) und der zweiten Öffnung (112) an demselben Ende der Kernstabanordnung (11) angeordnet ist, und jeder der Laternenringschlitze (115) neben dem Verlängerungsabschnitt (1141) am selben Ende der Kernstabanordnung (11) liegen.

10. Montagewerkzeug nach Anspruch 8, wobei eine ringförmiger Wölbung der Laterne (1143) auf einer Umfangsseite jedes Befestigungselements (114) vorgesehen ist, wobei sich die laternenförmige ringförmige Wölbung (1143) ringförmig von einer peripheren Seitenfläche jedes Fixierelements (114) erstreckt. 114); ein Aufnahmeloch, das den ersten Werkzeughohlraum (121) durchdringt, in jedem Ende des äußeren Werkzeugs (12) definiert ist; die Aufnahmelöcher sind konfiguriert, um die Kernstabanordnung (11) zu halten; ein Halteschlitz (123) ist in einer Innenwand jedes Aufnahmelochs definiert, und jede ringförmige Laternen-Wölbung (1143) wird in dem Halteschlitz (123) gehalten.

11. Montagewerkzeug nach Anspruch 1, wobei das Montagewerkzeug (100) ferner ein inneres Werkzeug (30) umfasst; die innere Matrize (30) eine hohle Säule ist, außerhalb des Kernstabes ummantelt ist Anordnung (11) und wird in dem ersten Formhohlraum (121) aufgenommen; ein dritter Werkzeughohlraum (301) in dem inneren Werkzeug (30) definiert ist, Hohlraumwände, die den dritten Werkzeughohlraum (301) bilden, an eine Form der elastischen Formhülse (20) angepasst sind, so dass die elastische Formhülse (20 ) an den Innenseiten des Innenstempels (30) angebracht ist.

12. Montagewerkzeug nach Anspruch 1, wobei die elastische Formhülse (20) aus SilikonGummi, Fluorelastomer oder EPDM-Gummi hergestellt ist.

## Revendications

1. Matrice d'assemblage comprenant : un moule de tube de protection (10) ; et
un manchon de moule élastique (20) disposé dans le moule de tube de protection (10) ; et dans lequel le moule de tube de protection (10) comprend une matrice externe (12) et un ensemble de tige centrale (11), une première cavité de matrice (121) est définie dans la matrice externe (12), le manchon de moule élastique (20) est gainé à l'extérieur de l'ensemble de tige centrale (11) et est reçu dans la première cavité de matrice (121), l'ensemble de tige centrale (11) passe à travers la matrice extérieure (12), et un espace entre le manchon de moule élastique (20) et l'ensemble de tige centrale (11) forme une seconde cavité de matrice (201) ;
dans laquelle le manchon de moule élastique (20) est réutilisé dans la matrice d'assemblage (100) ;
dans laquelle l'ensemble de tige centrale (11) définit une première ouverture (111) et une seconde ouverture (112) à chaque extrémité ; la première ouverture (111) et la seconde ouverture (112) à la même extrémité communiquent intérieurement l'une avec l'autre ; la première ouverture (111) et la seconde ouverture (112) à une extrémité de l'ensemble de tige centrale (11) sont utilisées pour le moulage par injection, et la première ouverture (111) et la seconde ouverture (112) à l'autre extrémité de l'ensemble de tige centrale (11) sont utilisées pour l'échappement du gaz pendant le processus de moulage par injection ; et la seconde ouverture (112) communique avec la seconde cavité de matrice (201).

2. La matrice d'assemblage selon la revendication 1, dans laquelle une fente annulaire de lanterne (115) est définie dans chaque extrémité de l'ensemble de tige centrale (11) ; le manchon de moule élastique (20) est un cylindre creux, deux extrémités du manchon de moule élastique (20) s'étendant respectivement vers l'intérieur pour former une pièce de maintien annulaire (202) ; la partie de maintien (202) est maintenue dans l'une des fentes annulaires de lanterne (115).

3. La matrice d'assemblage selon la revendication 2, dans laquelle l'ensemble de tige centrale (11) comprend un noyau de matrice (113) et deux éléments de fixation (114) ; le manchon de moule élastique (20) est gainé à l'extérieur du noyau de matrice (113), chacun des éléments de fixation (114) est fixé à une extrémité du noyau de matrice (113), et chacun des éléments de fixation (114) est relié à la matrice extérieure (12).

4. La matrice d'assemblage selon la revendication 3, dans laquelle les deux premières ouvertures (111) sont respectivement ouvertes sur deux surfaces d'extrémité du noyau de matrice (113), les deux secondes ouvertures (112) sont respectivement ouvertes sur une surface latérale périphérique du noyau de matrice (113) ; et la première ouverture (111) et la seconde ouverture (112) à la même extrémité pénètrent dans le noyau de matrice (113) et communiquent l'une avec l'autre à l'intérieur.

5. La matrice d'assemblage selon la revendication 4, dans laquelle les fentes annulaires de lanterne (115) sont définies dans les deux extrémités du noyau de matrice (113), et chacune des fentes annulaires de lanterne (115) est disposée entre la première ouverture (111) et la seconde ouverture (112) à la même extrémité.

6. La matrice d'assemblage selon la revendication 3, dans laquelle la matrice externe (12) est composée de deux moules symétriques et forme un cylindre creux ; les parois de cavité qui forment la première cavité de matrice (121) sont adaptées à une forme du manchon de moule élastique (20) pour monter le manchon de moule élastique (20) ; l'ensemble de tige centrale (11) traverse la matrice extérieure (12) le long d'un axe de la matrice extérieure (12), chacun des éléments de fixation (114) est vissé à une extrémité du noyau de matrice (113), et deux extrémités de la matrice extérieure (12) sont verrouillées aux éléments de fixation (114) par des vis.

7. La matrice d'assemblage selon la revendication 3, dans laquelle les deux premières ouvertures (111) sont respectivement définies dans les extrémités des éléments de fixation (114) ; chacune des secondes ouvertures (112) est définie dans un côté périphérique de l'un des éléments de fixation (114) ; et la première ouverture (111) et la seconde ouverture (112) définies dans le même élément de fixation (114) pénètrent dans l'élément de fixation (114) et communiquent l'une avec l'autre à l'intérieur.

8. La matrice d'assemblage selon la revendication 7, dans laquelle une partie d'extension (1141) est disposée sur une surface d'extrémité de chacun des éléments de fixation (114) et est adjacente à la seconde ouverture (112), une rainure est ouverte sur chaque surface d'extrémité du noyau de matrice (113) afin de correspondre à la partie d'extension (1141), et chacune des parties d'extension (1141) est maintenue dans la rainure.

9. La matrice d'assemblage selon la revendication 8, dans laquelle les fentes annulaires de lanterne (115) sont définies respectivement dans les deux éléments de fixation (114), chacune des fentes annulaires de lanterne (115) est située entre la première ouverture (111) et la seconde ouverture (112) à la même extrémité de l'ensemble de tige centrale (11), et chacune des fentes annulaires de lanterne (115) est adjacente à la partie d'extension (1141) à la même extrémité de l'ensemble de tige centrale (11).

10. La matrice d'assemblage selon la revendication 8, dans laquelle une lanterne annulaire bosselée (1143) est prévue sur un côté périphérique de chaque élément de fixation (114), la lanterne annulaire bosselée (1143) s'étend de manière annulaire à partir d'une surface latérale périphérique de chaque élément de fixation (114) ; un trou de réception pénétrant dans la première cavité de matrice (121) est défini dans chaque extrémité de la matrice extérieure (12) ; les trous de réception sont configurés pour maintenir l'ensemble de tige centrale (11) ; une fente de maintien (123) est définie dans une paroi intérieure de chaque trou de réception, et chaque lanterne annulaire bosselée (1143) est retenue dans la fente de maintien (123).

11. La matrice d'assemblage selon la revendication 1, dans laquelle la matrice d'assemblage (100) comprend en outre une matrice interne (30) ; la matrice interne (30) est une colonne creuse, qui est gainée à l'extérieur de l'ensemble de tige centrale (11), et est reçue dans la première cavité de matrice (121) ; une troisième cavité de matrice (301) est défini dans la matrice intérieure (30), les parois de cavité qui forment la troisième cavité de moule (301) sont adaptées à une forme du manchon de moule élastique (20), de sorte que le manchon de moule élastique (20) est fixé aux côtés intérieurs de la matrice intérieure (30).

12. La matrice d'assemblage selon la revendication 1, dans laquelle le manchon de moule élastique (20) est composé de caoutchouc de silicone, élastomère fluoré ou caoutchouc EPDM.
